Europäisches Patentamt

European Patent Office

Office européen des brevets

(11) Veröffentlichungsnummer: **0 203 058**
**A2**

## (12) EUROPÄISCHE PATENTANMELDUNG

(21) Anmeldenummer: 86890144.8

(22) Anmeldetag: 20.05.86

(51) Int. Cl.4: **B60T 7/06**

(30) Priorität: **21.05.85 AT 1517/85**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Wirmsberger, Gerhard**
**Rooseveltstrasse 2c**
**A-4400 Steyr(AT)**

(72) Erfinder: **Wirmsberger, Gerhard**
**Rooseveltstrasse 2c**
**A-4400 Steyr(AT)**

(54) **Vorrichtung zum Aufbau bzw. Erhöhen eines Druckes in einem Zylinder.**

(57) Gegenstand der Erfindung ist eine Vorrichtung zum Aufbau bzw. zum Erhöhen eines Druckes in einem Zylinder, vorzugsweise eines Hauptbremszylinder einer Bremsbetätigung, bei der zumindest ein Hebel vorhanden ist, der vorzugsweise durch Fußkraft betätigbar ist, welcher auf den Kolben des Zylinders kraftmäßig einwirkt, wobei eine Führung (Ringe 4, 5) für die Verbindung (Kolbenstange 1) von Kolben (2) des Zylinders (3) und Hebel (Bremshebel 6) vorhanden ist, durch die die Verbindung (Kolbenstange 1) oder/und der Kolben (2) in einer bestimmten, vorgegebenen Richtung bewgvar ist.

Fig.1

## Vorrichtung zum Aufbau bzw. Erhöhen eines Druckes in einem Zylinder

Gegenstand der Erfindung ist eine Vorrichtung zum Aufbau bzw. Erhöhen eines Druckes in einem Zylinder, vorzugsweise eines Hauptbremszylinders einer Bremsbetätigungseinrichtung, bei der zumindest ein Hebel vorhanden ist, der vorzugsweise durch Fußkraft betätigbar ist, welcher Hebel auf den Kolben des Zylinders kraftmäßig einwirkt.

Üblicherweise ist der genannte Hebel gelenkig mit der zwischen ihm und der vom Kolben bewegten Kolbenstange verbunden.

Durch diese gelenkige Anordnung ist eine Übersetzung des Hebels, also des Bremshebels, nur in einem geringen Ausmaß gegeben.

Aufgabe der Erfindung ist es daher, eine Vorrichtung obiger Art anzugeben, bei der eine entscheidend vergrößerte Übersetzung möglich ist.

Erfindungsgemäß wird vorgeschlagen, die Kolbenstange in einer Führung anzuordnen, die im wesentlichen oder gänzlich in der Längsrichtung des Zylinders oder/und Druckrichtung des Kolbens desselben verläuft.

In einer weiteren Ausführung der Erfindung hat zumindest ein Drehpunkt des genannten Hebels keine oder keine wesentliche Begrenzung in Richtung zu bzw. in Bezug auf zumindest einem weiteren Drehpunkt des genannten Hebels.

In einer Ausführung der Erfindung ist der genannte Hebel mit der Kobenstange angelenkt verbunden, es besteht also eine lose bzw. aneinander gleitbare Verbindung, die ein gegenseitig verschiebbares Bewegen erlaubt.

Weitere Einzelheiten der Erfindung sind aus der nachfolgenden Beschreibung von Ausführungsbeispielen aufgezeigt, in der auf die Zeichnung Bezug genommen wird.

Hierzu zeigen:

Fig. 1 eine erfindungsgemäße Ausführung im Querschnitt, wobei die

Fig. 2 einen Schnitt nach der Linie A -A von Fig. 1 bringt.

Die Kolbenstange 1 des Kolbens 2 des Hauptbremszylinders 3 wird durch die als Führungen dienenden Ringe 4 und 5 im wesentlichen parallel zur Längsrichtung des Hauptbremszylinders 3 gehalten. Der Ring 4 ist im Zylinder 3 angeordnet, der Ring 5 an einem ortsfesten Teil im Fahrzeug.

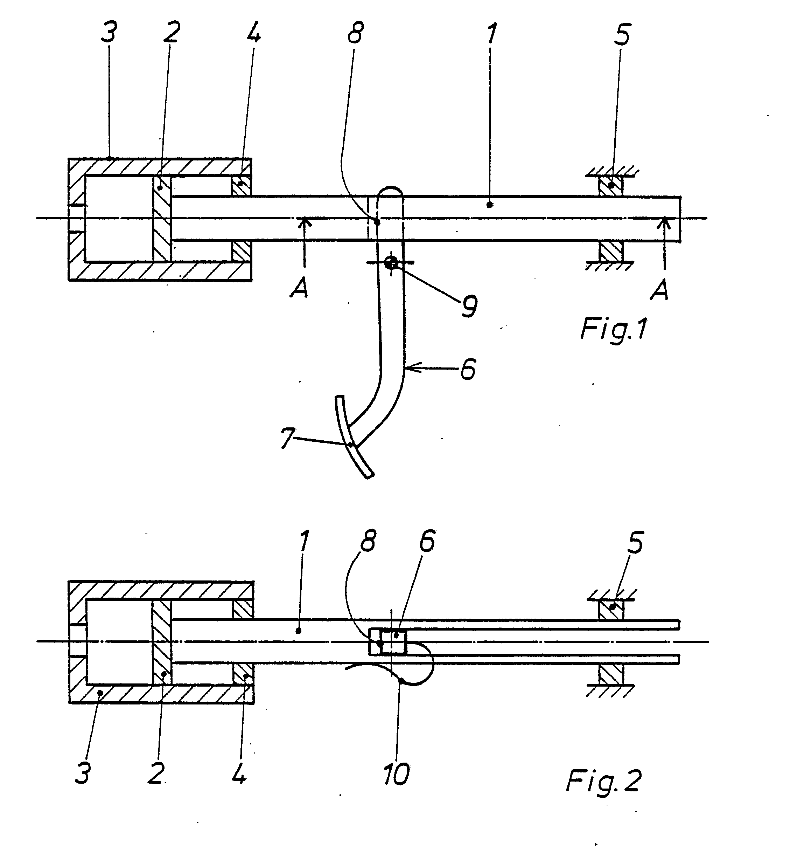

Der Bremshebel 6 mit den Dreh-bzw. Angriffspunkten 8 und 9 weist an einem Ende das Bremspedal 7 auf und ist in der geschlitzt ausgeführten Kolbenstange 1 angelenkt, wie auch die Fig. 2 zeigt, wobei die Blattfeder 10 den Bremshebel und die Kolbenstange aneinanderhält.

Bei Bremsbetätigung bewegt der Bremshebel 6 die Kolbenstange nach links, wodurch sich Druck aufbaut bzw. erhöht.

Es ist auch möglich, den Dreh-bzw. Angriffspunkt 9 am oberen Ende des Hebels 6 anzuordnen.

Da der Hebel 6 angelenkt ist an der Kolbenstange 1 und deren Auslenken durch die Führungen 4 und 5 praktisch nicht möglich ist, kann die Übersetzung von oberen Hebelarm zu unteren Hebelarm des Hebels 6 sehr günstig bemessen werden.

In Hinblick auf die Reibungsverhältnisse ist es vorteilhaft, an der Berührungsfläche der Kolbenstange 1 bzw. an der Angriffsfläche 8 des Hebels 6 eine Evolventenverzahnung anzubringen. Desgleichen könnte am Hebel 6 eine die Kolbenstange 1 abrollende bzw. daran angelenkte -unter "Anlenken" wird in der gegenständlichen Anmeldung eine gegeneinander verschiebliche, in Bezug auf den Abstand von Angriffsfläche 8 des Hebels 6 zu dessen Drehpunkt 9 eine Veränderung zulassende Verbindung verstanden -Rolle angeordnet sein.

**Ansprüche**

1. Vorrichtung zum Aufbau bzw. zum Erhöhen eines Druckes in einem Zylinder, vorzugsweise eines Hauptbremszylinders einer Bremsbetätigungseinrichtung, bei der zumindest ein Hebel vorhanden ist, der vorzugsweise durch Fußkraft betätigbar ist, welcher Hebel auf den Kolben des Zylinders kraftmäßig einwirkt, dadurch gekennzeichnet, daß eine Führung (Ringe 4, 5) für die Verbindung (Kolbenstange 1) von Kolben (2) des Zylinders (3) und Hebel (Bremshebel 6) vorhanden ist, durch die die Verbindung oder/und der Kolben - (2) in einer bestimmten, vorgegebenen Richtung bewegbar ist.

2. Vorrichtung nach Anspruch 1, dadurch gekennzeichnet, daß von der genannten Führung (Ringe 4, 5) die genannte Verbindung (Kolbenstange 1) im wesentlichen oder gänzlich in der Längsrichtung des Zylinders (3) gehalten wird.

3. Vorrichtung nach Anspruch 1 oder/und 2, dadurch gekennzeichnet, daß zumindest in einem Bereich des Hebels (6) eine Anordnung vorhanden ist, bei der der Abstand von zumindest zwel Dreh- bzw. Angriffspunkten des Hebels (6) veränderbar ist.

4. Vorrichtung nach Anspruch 1, 2 oder/und 3, dadurch gekennzeichnet, daß in Bezug auf gegenseitiges Bewegen von der genannten Verbindung (Kolbenstange 1) und Hebel (6) keine oder keine wesentliche Begrenzung vorhanden ist.

5. Vorrichtung nach Anspruch 3 oder/und 4, dadurch gekennzeichnet, daß die genannte Anordnung aus einem Anlenken des Hebels (6) an der Verbindung (Kolbenstange 1) besteht.

6. Vorrichtung nach einem oder mehreren der Ansprüche 1 -5, dadurch gekennzeichnet, daß die genannte Führung durch Anschläge (Ringe 4, 5) gebildet wird.

0 203 058

Fig.1

Fig.2